# FASCICULE DE BREVET EUROPEEN

(11) **EP 1 174 677 B1**
(45) Date de publication et mention de la délivrance du brevet: **20.10.2004**
(21) Numéro de dépôt: 01401901.2
(22) Date de dépôt: 16.07.2001
(51) Int. Cl.: F42B 10/60, G05D 1/02

(54) **Système de stabilisation d'un drone et système de pilotage d'un drone utilisant un tel système de stabilisation**
Stabilisierungsvorrichtung und diese nutzendes Steuerungssystem für eine Drohne
Stabilization system for a drone and steering system for a drone using such a stabilization system

(30) Priorité: 18.07.2000 FR 0009388
(43) Date de publication de la demande: 23.01.2002
(73) Titulaire: Aerospatiale Matra Missiles, 75781 Paris Cedex 16 (FR)
(72) Inventeur: Debourle, François, 92160 Antony (FR)
(74) Mandataire: Poulin, Gérard

(56) Documents cités:
- EP-A- 0 812 435
- DE-A- 19 614 987
- US-A- 2 828 930

## Description

### Domaine technique

La présente invention concerne un système de stabilisation d'un drone et un système de pilotage d'un drone utilisant un tel système de stabilisation.

### État de la technique antérieure

Lorsqu'un drone est amené à évoluer hors vue du pilote au sol, le problème le plus important à résoudre est celui de sa stabilisation, car le pilotage à partir des images transmises par un capteur tel qu'une caméra de télévision reste délicat. Pour réaliser automatiquement une telle stabilisation, il est connu d'utiliser une mini-centrale inertielle. Mais une telle centrale reste volumineuse, consomme de l'énergie électrique et est relativement chère.

Il est également connu d'utiliser un capteur optique, qui, par mesure de l'éclairement reçu dans les fenêtres dont il est muni, est capable de déterminer précisément la position de l'horizon de chaque côté de son axe, voir à cet effet le document EP-A-0812435.

L'invention a pour objet un système de stabilisation d'un drone utilisant un capteur optique de ce type, ainsi qu'un système de pilotage de ce drone permettant un pilotage hors vue de celui-ci utilisant un tel système de stabilisation.

### Exposé de l'invention

La présente invention concerne un système de stabilisation d'un drone comprenant un capteur optique muni de quatre fenêtres transparentes, diamétralement opposées deux à deux, fixé sur une platine, caractérisé en ce que ce capteur est monté sur un système à la cardan avec deux axes de rotation perpendiculaires, un cadre étant mobile autour d'un premier axe parallèle à l'axe longitudinal du fuselage du drone, le second axe qui est horizontal étant fixé sur ce cadre, la platine étant mobile autour de ce second axe, et en ce que ledit système comprend deux servocommandes de commande de la position respective du capteur optique, le premier étant fixé dans le fuselage du drone, le second étant solidaire de la platine.

Avantageusement ce système comprend :
- une timonerie de la commande de tangage faisant la liaison entre la platine et une servocommande de tangage,
- une timonerie de la commande en roulis faisant la liaison entre le cadre mobile et une servocommande de roulis,
- des pattes de fixation, solidaires du fuselage du drone.

Avantageusement les pattes de fixation sont fixées dans le fond du fuselage du drone, le capteur optique se trouvant sous le fuselage, dans lequel est percé un trou pour permettre le débattement de ce capteur optique.

Avantageusement le système comprend un système de commande comportant un récepteur de télécommande, relié à une antenne et à une batterie, qui délivre des signaux :
- de commande de la position en roulis du capteur optique à la servocommande de roulis,
- de commande de la position en tangage du capteur optique à la servocommande de tangage,
- de tangage et de roulis à un boîtier électronique qui lui-même reçoit le signal de sortie du capteur optique et envoie des signaux de commande à des servocommandes gouverne de roulis et de tangage.

Avantageusement, chaque servocommande est commandée à l'aide d'un curseur, muni de butées mécaniques.

Le système de l'invention présente de nombreux avantages :
- il permet de réaliser une stabilisation sûre, efficace et bon marché,
- il n'utilise pas de gyroscope : il n'y a donc pas dérive. La stabilisation, qui est toujours nominale quelle que soit la durée de vol et quelles que soient les évolutions effectuées par le drone, est précise,
- il ne nécessite pas de réglage,
- la consommation électrique est plus faible que dans les systèmes de l'art connu,
- les virages effectués par le drone sont à inclinaison constante pour une position du curseur sur le boîtier de commande, le réglage correspondant étant effectué en usine,
- lors des virages, la compensation lacet-tangage est assurée automatiquement,
- si le pilote perd le contrôle du drone, il n'a qu'à lâcher les manches et mettre les curseurs au neutre ; le drone se stabilise alors automatiquement, les ailes à plat et en vol horizontal.

La présente invention concerne également un système de pilotage d'un drone utilisant un tel système de stabilisation.

L'utilisation d'un tel système de stabilisation pour piloter un drone hors de la vue du pilote au sol permet d'entreprendre des évolutions à distance en toute sécurité. Ainsi, les virages se font à une cadence limitée, fixée par les besoins de la mission, l'attitude du drone en tangage étant contrôlée en permanence par le système de stabilisation. De même, ce système permet des montées et des descentes du drone à pente constante et limitée par construction, notamment en phase d'atterrissage.

La sécurité du drone est assurée dans toutes les phases du vol, puisqu'il évolue à roulis nul et à altitude constante lorsque le pilote place les curseurs de commande de la position du capteur optique du système de stabilisation en position neutre.

### Brève description des dessins

La figure 1 illustre un système de stabilisation d'un drone selon l'invention.

Les figures 2 et 3 illustrent le système de la figure 1 après implantation sur un drone, respectivement dans une vue longitudinale et dans une vue en coupe.

La figure 4 illustre un exemple d'un boîtier de commande d'un tel système de stabilisation.

La figure 5 illustre les circuits de commande d'un tel système de stabilisation.

### Exposé détaillé des modes de réalisation

Le problème de la stabilisation des drones en vol hors de la vue du pilote est généralement résolu avec des capteurs inertiels, qui consomment de l'énergie électrique, qui sont d'un coût élevé, et qui sont sujets à des dérives au cours du temps. Pour résoudre ce problème, l'invention propose un système de stabilisation de drone reprenant un système de l'art connu utilisé comme un moyen de récupération d'un avion télécommandé dont le pilote aurait perdu le contrôle. Dans un tel système, un capteur optique comprenant quatre petites fenêtres transparentes, diamétralement opposées deux par deux, est fixé sous l'avion. Lorsque le capteur est en place, deux fenêtres sont dirigées vers la droite et la gauche de l'avion, les deux autres étant orientées vers l'avant et vers l'arrière. Ainsi monté, le capteur optique et son électronique permettent de stabiliser l'avion équipé en roulis d'une part, et en tangage d'autre part. Lorsque le pilote perd le contrôle de l'avion, il lâche les manches qui reviennent au neutre sous l'action d'un ressort de rappel et l'avion est stabilisé à roulis nul et en vol à plat. En sortie du boîtier de commande, des ordres sont envoyés aux servocommandes qui contrôlent les voies de roulis et de tangage de l'avion.

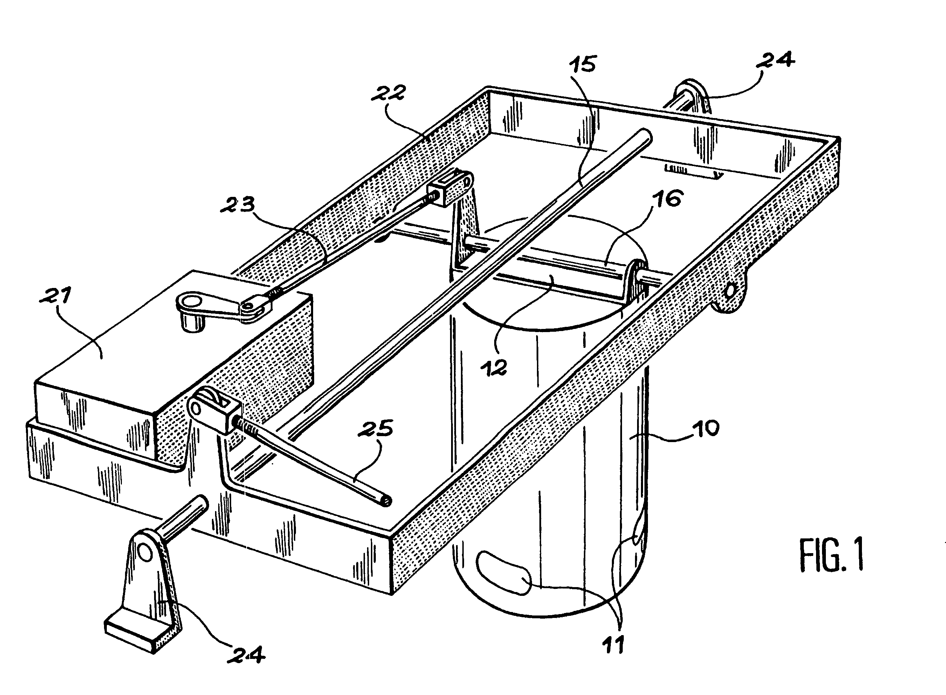

Le système de stabilisation d'un drone 39 selon l'invention, tel qu'illustré sur la figure 1, comprend un tel capteur optique, 10 muni de quatre petites fenêtres 11 transparentes, et diamétralement opposées deux à deux, par exemple selon deux directions à 90° l'une de l'autre, et fixé sur une platine 12.

Ce capteur 10 est monté sur un système à la cardan avec deux axes de rotation perpendiculaires 15 et 16, un cadre 22 étant mobile autour d'un premier axe 15 (axe de roulis) parallèle à l'axe longitudinal du fuselage du drone, le second axe 16 (axe de tangage) qui est horizontal (en axes fuselage) étant fixé sur ce cadre 22, la platine 12 étant mobile autour de ce deuxième axe 16.

Ce système comprend deux servocommandes de commande de la position respective du capteur optique, la première (roulis) 20 étant fixée dans le fuselage de drone, la seconde (tangage) 21 étant solidaire du cadre 22.

Sur la figure 1 sont également illustrés :
- une timonerie de la commande de tangage 23 effectuant la liaison entre la platine 12 et la servocommande de tangage 21,
- une timonerie de la commande en roulis 25 effectuant la liaison entre le cadre mobile 22 et la servocommande de roulis 20 (cette servocommande 20 n'étant pas représentée sur la figure 1),
- des pattes de fixation 24, solidaires du fuselage du drone 39.

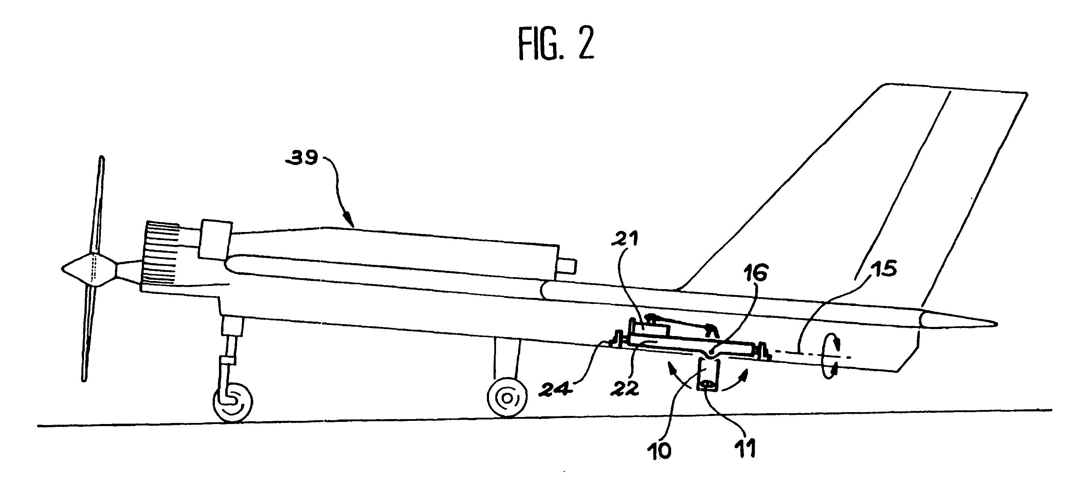

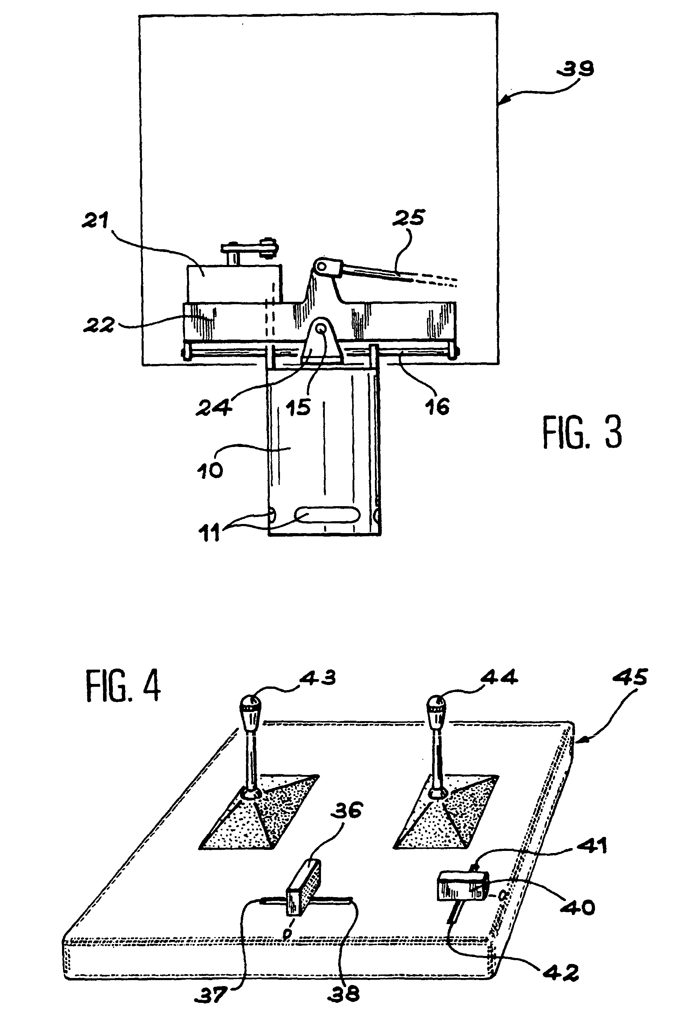

L'ensemble du système illustré sur la figure 1, se fixe dans le fond du fuselage du drone 39 à l'aide des pattes de fixation 24, comme illustré sur les figures 2 et 3. Le capteur optique 10 se trouve placé sous le fuselage, dans lequel est percé un trou pour permettre le débattement du capteur optique 10.

La figure 4 illustre un exemple de boîtier de commande 45, chaque servocommande 20, 21 étant commandée à l'aide d'un curseur, muni de butées mécaniques. Le curseur 36, pour la commande en lacet, a des butées 15° gauche et 15° droite 37 et 38, et le curseur 40, pour la commande en tangage a des butées 10° piqué et 10° cabré 41 et 42. Ce boîtier comporte également deux manches de commande 43 et 44.

Chacune des deux servocommandes est ainsi commandée à l'aide d'un curseur que le pilote place dans la position voulue aussi longtemps qu'il veut exécuter une manoeuvre en lacet ou en tangage. Les butées mécaniques des curseurs correspondent au taux de virage ou à la pente de descente ou montée réglés en usine. Pour celles-ci, le déplacement du capteur optique peut être de 10°, de part et d'autre de la position neutre.

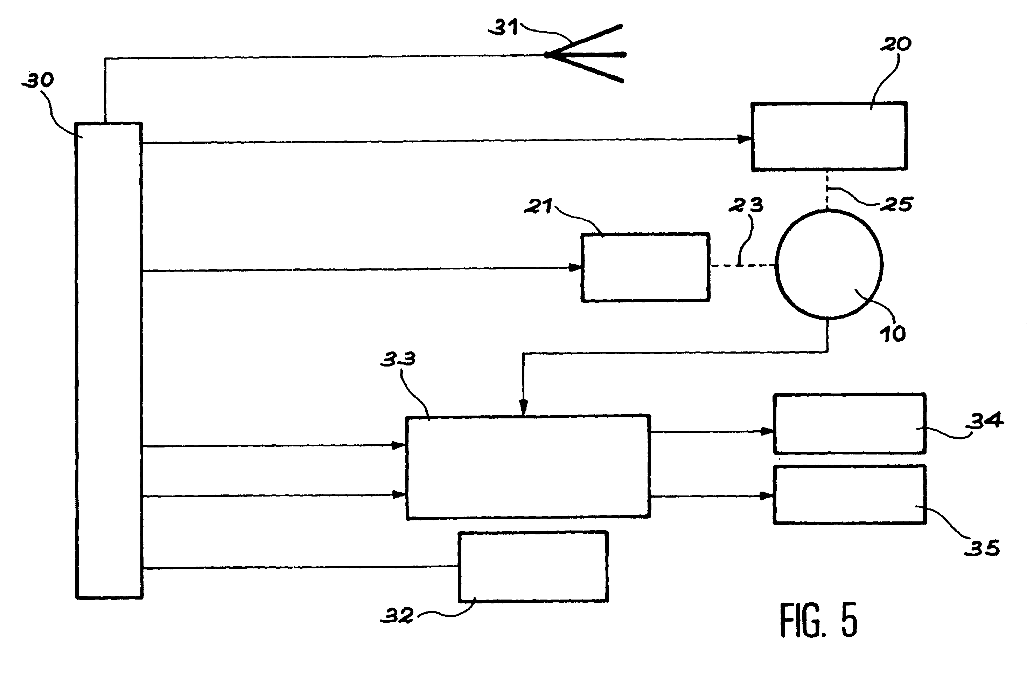

Comme illustré sur la figure 5, un système de commande d'un tel circuit de stabilisation comprend un récepteur de télécommande 30 relié à une antenne 31, et à une batterie 32 ( par exemple 6 Volts : 1400 mAh), et qui délivre des signaux :
- de commande de la position en roulis du capteur optique 10 à la servocommande de roulis 20,
- de commande de la position en tangage du capteur optique 10 à la servocommande de tangage 21,
- de tangage et de roulis à un boîtier électronique 33 qui lui-même reçoit le signal de sortie du capteur optique 10 et envoie des signaux de commande à des servocommandes de gouverne de roulis et de tangage, 34 et 35.

Le système de stabilisation de l'invention fonctionne de la façon suivante, en utilisant le capteur optique 10 aux fins de pilotage du drone 39 :

### Pilotage en tangage

Afin de faire varier la pente du drone 39, le pilote agit directement sur la position du capteur optique 10 par rapport au fuselage du drone. Ce capteur, en effet, est mobile autour d'un axe horizontal (en repère lié au fuselage) perpendiculaire à l'axe longitudinal du fuselage. Le capteur 10 étant maintenu dans une position strictement verticale (en repère lié au sol), il génère donc les ordres de tangage nécessaires et modifie ainsi la pente du drone. Si l'on incline le capteur optique 10 de 10° vers l'avant par exemple (sens de déplacement du drone) le système de stabilisation commande une pente de descente du drone 39 de 10° aussi longtemps que le pilote maintient le capteur 10 dans cette position.

### Pilotage en roulis (ou lacet)

Le pilote commande le déplacement du capteur optique 10 dans un plan vertical (en axes fuselage) perpendiculaire à l'axe longitudinal du fuselage du drone 39. En effet, si l'on incline dans ce plan le capteur optique 10 par rapport à sa position nominale, le principe du système de stabilisation a tendance à le ramener en position verticale (en repère sol) et donc d'incliner le drone 39 en roulis du côté où l'on a amené le capteur (si l'on met le capteur à droite de sa position nominale le système de stabilisation générera un ordre en roulis tel que le drone aura son aile droite inclinée vers le bas).

Contrairement à certains drones de l'art connu dans lesquels les mouvements en lacet sont commandés par les ailerons habituellement utilisés pour le contrôle en roulis, la prise de roulis générant alors un mouvement en lacet et un mouvement parasite en tangage, ce système de stabilisation permet de résoudre le problème de la compensation lacet-tangage, nécessaire pour corriger les variations de pente générées par la mise en virage et par la sortie de virage puisque le système de stabilisation continue à contrôler la voie de tangage pendant un virage. L'utilisation du capteur optique comme moyen de pilotage permet alors de commander des virages à roulis constant, et donc à cadence constante.

Dans un exemple de réalisation du système de l'invention, le cadre 22 est en métal ou en matériau composite. Le système de stabilisation, tel qu'illustré sur la figure 1, a une longueur de 13 à 15 centimètres, une largeur de 7 à 8 centimètres, une hauteur hors tout d'environ 8 centimètres. Le capteur optique 10 a une hauteur d'environ 4 centimètres et un diamètre d'environ 2 centimètres. Le poids estimé, y compris les servocommandes, est d'environ 150 grammes.

## Revendications

1. Système de stabilisation d'un drone comprenant un capteur optique (10), muni de quatre fenêtres (11) transparentes et diamétralement opposées deux à deux, fixé sur une platine (12), **caractérisé en ce que** ce capteur (10) est monté sur un système à la cardan avec deux axes de rotation perpendiculaires (15, 16), un cadre (22) étant mobile autour d'un premier axe (15) parallèle à l'axe longitudinal du fuselage du drone (39), le second axe (16) qui est horizontal étant fixé sur ce cadre (22), la platine (12) étant mobile autour de ce second axe (16), et **en ce que** ledit système comprend deux servocommandes (20, 21) de commande de la position du capteur optique, le premier étant fixé dans le fuselage du drone (39), le second étant solidaire de ce cadre (22).

2. Système selon la revendication 1, comprenant :
- une timonerie de la commande de tangage (23) faisant la liaison entre la platine (12) et une servocommande de tangage (21),
- une timonerie de la commande de roulis (25) faisant la liaison entre le cadre mobile (22) et une servocommande de roulis (20),
- des pattes de fixation (24), solidaires du fuselage du drone.

3. Système selon la revendication 2, dans lequel les pattes de fixation (24) sont fixées dans le fond du fuselage du drone (39), le capteur optique (10) se trouvant sous le fuselage, dans lequel est percé un trou pour permettre le débattement de ce capteur optique (10).

4. Système selon la revendication 1 comprenant un système de commande comportant un récepteur de télécommande (30), relié à une antenne (31) et à une batterie (32), qui délivre des signaux :
- de commande de la position en roulis du capteur optique (10) à la servocommande de roulis (20),
- de commande de la position en tangage du capteur optique (10) à la servocommande de tangage (21),
- de tangage et de roulis à un boîtier électronique (33) qui lui-même reçoit le signal de sortie du capteur optique (10) et envoie des signaux de commande à des servocommandes gouverne de roulis et de tangage (34 et 35).

5. Système selon la revendication 1, dans lequel chaque servocommande (20, 21) est commandée à l'aide d'un curseur (36, 40), muni de butées mécaniques (37, 38 ; 41, 42).

6. Système de pilotage d'un drone utilisant un système de stabilisation selon l'une quelconque des revendications précédentes.

## Patentansprüche

1. System zur Stabilisierung einer Drohne mit einem optischen Messfühler (10), der mit vier lichtdurchlässigen und paarweise diametral entgegengesetzten Fenstern (11) versehen und auf einer Platine (12) befestigt ist,
**dadurch gekennzeichnet, dass** dieser Messfühler (10) auf einem kardanischen System mit zwei senkrechten Drehachsen (15,16) angebracht ist, wobei ein Rahmen (22) um eine zur Längsachse des Rumpfes der Drohne (39) parallele erste Achse (15) beweglich ist, die zweite, horizontale Achse (16) an dem Rahmen (22) befestigt ist, und die Platine (12) um diese zweite Achse (16) beweglich ist, und dass
das System zwei Servosteuereinrichtungen (20,21) zum Steuern der Position des optischen Messfühlers umfasst, wobei die erste im Rumpf der Drohne (39) befestigt ist und die zweite mit dem Rahmen (22) einstückig ist.

2. System nach Anspruch 1, mit:
- einem Schaltgestänge (23) zur Nick(schwingungs)-steuerung, das die Verbindung zwischen der Platine (12) und einer Nick(schwingungs)-Servosteuereinrichtung (21) herstellt,
- einem Schaltgestänge zur Rollsteuerung (25), das die Verbindung zwischen dem beweglichen Rahmen (22) und einer Roll-Servosteuereinrichtung (20) herstellt,
- Befestigungsklauen (24), die mit dem Rumpf der Drohne einstückig sind.

3. System nach Anspruch 2, bei dem die Befestigungsklauen (24) an der Unterseite des Rumpfes der Drohne (39) befestigt sind, wobei sich der optische Messfühler (10) unter dem Rumpf befindet, in den ein Loch gebohrt ist, um die Verschiebung bzw. Winkelversetzung dieses optischen Messfühlers (10) zu ermöglichen.

4. System nach Anspruch 1 mit einem Steuersystem, das einen mit einer Antenne (31) und einer Batterie (32) verbundenen Fernsteuerungs-Empfänger (30) aufweist, der folgende Signale liefert:
- zur Steuerung der Rollposition des optischen Messfühlers (10) an die Roll-Servosteuereinrichtung (20),
- zur Steuerung der Nick(schwingungs)position des optischen Messfühlers (10) an die Nick(schwingungs)-Servosteuereinrichtung (21),
- Nick- und Rollsignale an ein elektronisches Gehäuse (33), das selbst das Ausgangssignal des optischen Messfühlers (10) empfängt und Steuersignale an Servosteuereinrichtungen (34 und 35) zum Steuern des Rollens und Nickens sendet.

5. System nach Anspruch 1, bei dem jede Servosteuereinrichtung (20,21) mittels eines mit mechanischen Anschlägen (37,38;41,42) versehenen Cursors (36,40) gesteuert wird.

6. System zur Steuerung einer Drohne unter Verwendung eines Stabilisierungssystems gemäß einem der vorangehenden Ansprüche.

## Claims

1. Stabilisation system for a drone comprising an optic sensor (10), provided with four windows (11), transparent and diametrically opposite each other in pairs, fixed on a plate (12), **characterised in that** this sensor (10) is mounted on a universal joint assembly with two perpendicular rotation axes (15, 16), a frame (22) being mobile around a first axis (15) parallel to the longitudinal axis of the fuselages of the drone (39), the second axis (16) which is horizontal being fixed on this frame (22), the plate (12) being mobile around this second axis (16), and **in that** said system comprises two servo-control commands (20, 21) for commanding the position of the optic sensor, the first being set in the fuselage of the drone (39), the second being integral with this frame (22).

2. System according to claim 1, comprising:
- a pitch actuating linkage (23) making the link between the plate (12) and a pitch servo-control (21),
- a roll actuating linkage (25) making the link between the mobile frame (22) and a roll servo-control (20),
- mounting lugs (24), integral with the fuselage of the drone.

3. System according to claim 2, in which the mounting lugs (24) are fixed in the bottom of the fuselage of the drone (39), the optic sensor (10) being under the fuselage, in which a hole is pierced to allow the displacement of this optic sensor (10).

4. System according to claim 1 comprising a command system comprising a remote control receiver (30), linked to an aerial (31) and to a battery (32), which delivers the signals:
- for command of the roll position from the optic sensor (10) to the roll servo-control (20),
- for command of the pitch position from the optic sensor (10) to the pitch servo-control (21),
- for pitching and rolling to an electronic box (33) which itself receives the output signal from the optic sensor (10) and sends the command signals to the servo-controls governing the roll and pitch (34 and 35).

5. System according to claim 1, in which each servo-control (20, 21) is commanded with the aid of a cursor (36, 40), provided with mechanical stops (37, 38; 41, 42).

6. System for piloting a drone using a stabilisation system according to any one of the preceding claims.
